(19) Europäisches Patentamt
European Patent Office
Office européen des brevets

(11) Publication number: 0 243 497 B1

(12) **EUROPEAN PATENT SPECIFICATION**

(45) Date of publication of patent specification: **30.05.90**

(51) Int. Cl.[5]: **C 07 F 9/02**, C 07 F 9/141, C 07 F 9/40, C 08 K 9/04, C 09 C 3/08

(21) Application number: **85905109.6**

(22) Date of filing: **12.10.85**

(86) International application number: **PCT/JP85/00568**

(87) International publication number: **WO 87/02362 23.04.87 Gazette 87/09**

(54) **ORGANOTITANIUM COMPOUNDS AND SURFACE-TREATING AGENTS.**

(43) Date of publication of application: **04.11.87 Bulletin 87/45**

(45) Publication of the grant of the patent: **30.05.90 Bulletin 90/22**

(84) Designated Contracting States: **DE FR GB IT**

(56) References cited: **GB-A-1 521 383**

(73) Proprietor: **NIPPON SODA CO., LTD.**
**2-1, Ohtemachi 2-chome**
**Chiyoda-ku, Tokyo 100 (JP)**

(72) Inventor: **SATO, Masayuki**
**2-12-13, Daida Setagaya-ku**
**Tokyo 155 (JP)**
Inventor: **KOBAYASHI, Noriyuki**
**2-4, Yushudai higashi Ichihara-shi**
**Chiba 299-01 (JP)**
Inventor: **FUNAMOTO, Akihiko**
**1-13-11, Hakusan Abiko-shi**
**Chiba 270-11 (JP)**
Inventor: **KATAOKA, Yoshitoshi**
**2-4, Yushudai higashi Ichihara-shi**
**Chiba 299-01 (JP)**

(74) Representative: **van der Beek, George Frans, Ir. et al**
**Nederlandsch Octrooibureau Scheveningseweg 82 P.O. Box 29720**
**NL-2502 LS 's-Gravenhage (NL)**

**EP 0 243 497 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technological field

This invention relates to a new organo-titanium compound and more particularly to an alkoxy titanium acylate derivative with a coordinated phosphite diester (phosphonate diester).

The invention also relates to a surface treating agent containing the said compound as an effective component.

More particularly the invention relates to an organo-titanium surface treating agent used for aiming at improving the dispersibility of the filler in the polymer medium by modifying the surface of the filler in a solid substance, e.q. in a composite polymer system of which a polymer substance is compounded with a filler, and at improving the physical properties of the composite polymer system, as well as to the organo-titanium compound which is its effective component.

Background technologies

A polymer system is conventionally used as a composite system of which a filler is added and mixed, aiming at improving the properties such as dimensional stability and heat resistance.

However compounding a polymer system with a filler results in reduced processability or lowered mechanical properties.

Methods that a substance such as a surface active agent or metal soap if added to the composite system to use are known as a means to solve these problems.

These methods however have not given fully satisfactory results yet.

In addition to the above, the addition and use of a silane compound, so-called a silane coupling agent, to the aforementioned composite system is known as a method to eliminate these defects. (Encyclopedia of Chemical Technology, Vol. 6, p 627, Interscience Publishers (1967)).

The silane coupling agent is not always effective, depending on the chemical composition, type of filler, etc., of the polymer system which the composite system consists of (Polymer Digest, Vol. 34, March, p 23 (1982); Plastic Age. March, p 61 (1981)).

The use of organo-titanium coupling agent with an organo-titanium compound as an effective component, as a substitute for the silane coupling agent is proposed. (Polymer digest, Vol. 34, March, p 23 (1982); Vol. 34, May, p 40 (1982)).

However the organo-titanium coupling agents known in the art, as described in the above references, have been recognized to improve the dispersibility of the filler in the composite system but are less effective to increase the strength of the cured substance of the composite system resin.

These organo-titanium compounds may be effective to decrease the viscosity of the mixed system when a filler is blended into a polymer medium but does not sufficiently improve the dispersibility of the filler into the polymer medium. Depending on a polymer medium used, the density might be increased on the contrary.

In addition to the above, the using ways of these organo-titanium coupling agents and the treatment methods of the composite systems are complicated.

Purposes of invention

This invention purposes to offer an organo-titanium surface treating agent which is applicable, less depending on types of fillers and polymer media used, when a filler is dispersed into a polymer medium, and as well as is extremely excellent in the improvement of dispersibility and physical properties of the filler-polymer system, and to offer a new organo-titanium compound which is an effective component of it.

Disclosure of invention

The repeated earnest studies of the inventors to attain the purposes mentioned above result in finding that new derivatives of alkoxy titanium acylates, which are used as effective components in conventional organo-titanium surface treating agents, to which a phosphite diester (phosphonate diester) is coordinated, are excellent in coupling between the polymer medium and the filler. Thus the invention is completed.

This invention relates to an organo-titanium compound represented by general formula (I) shown below:

$$(RO)_n\text{—Ti—}(OCOR')_{4-n} \leftarrow (H(O)P(OR'')_2)_m \qquad (I)$$

wherein the symbols R are the same or different radicals and represent alkyl radicals and alkenyl radicals having from 1 to 8 carbon atoms, the symbols R′ are the same or different radicals and represent alkyl radicals, alkenyl radicals or aryl radicals having from 1 to 22 carbon atoms which are unsubstituted or substituted by a halogen atom, a hydroxyl group, an amino group, a nitro group, a mcercapto group or an epoxygroup, the symbols R″ are the same or different radicals and represent alkyl radicals, alkenyl radicals or aryl radicals having from 3 to 22 carbon atoms which are unsubstituted or substituted by a halogen atom

or an alkyl group or R'' represents $C_4H_9$, $C_8H_{17}$, $C_{12}H_{25}$, $C_6H_5$, $HOC_6H_4C_3H_{17}$, $CH_2{=}CHCH_2$, $ClCH_2CHClCH_2$, $CH_2{=}C(CH_3)COOC_2H_4$ and $CH_3CH_2OCH_2CH_2$

n is an integer from 1 to 3, and

m is 1 or 2.

and to a surface treating agent with the said organo-titanium compound as an effective component.

In this invention, the above organo-titanium compound is synthesized by reacting the following (A), (B) and (C) components.

Component (A): a tetraalkoxy titanium compound represented by general formula (II)

$$Ti(OR)_4 \qquad (II)$$

(where R is as defined above)

Component (B): a carboxylic acid represented by general formula (III)

$$R'COOH \qquad (III)$$

(where R' is as defined above)

Component (C): a phosphite diester represented by general formula (IV) or its tautomer, phosphonate diester

$$(R''O)_2P(O)H \qquad (IV)$$

(where R'' is as defined above)

In the invention, the —(OR) groups in the above general formulae, (I) and (II), are hydrolytic groups whose R radicals are the same or different radicals selected from the group consisting of alkyl radicals and alkenyl radicals having from 1 to 8 carbon atoms.

In the organo-titanium compounds represented by general formula (I) mentioned above, a compound having long-chain substitutes in which R has reduced affinity with the filler is used as an effective component of a surface treating agent.

In the synthesis of the organo-titanium compound represented by general formula (I), Component (A), if a tetraalkoxy titanium compound having long-chain substitutes in which R has more than 8 carbon atoms, is less reactive with Components (B) and (C).

A typical compound of Component (A) represented by general formula (II) mentioned above and used for the synthesis of the organo-titanium compound represented by above general formula (I) includes:

$Ti(OC_3H_7)_4$, $Ti(OC_4H_9)_4$, $Ti(OC_8H_{17})_4$, $Ti(OCH_2CH{=}CH_2)_4$ or $Ti(C_4H_9O)(C_3H_7O)_3$.

The —(OCOR') group in general formula (I) mentioned above and the R'COO— group in general formula (III) are lipophilic carboxylate residual groups with affinity with the polymer medium, in which R' is an alkyl radical, an alkenyl radical or an aryl radical, substituted or not substituted, having from 1 to 22 carbon atoms.

Examples of a substituent for R' include a halogen atom, a hydroxyl group, an amino group, a nitro group, a mercapto group and an epoxy group.

In the organo-titanium compound represented by general formula (I), the symbols R' may be different radicals.

In the synthesis of the organo-titanium compound represented by general formula (I), Component (B) is hard to handle for the synthetic reaction if R' in general formula (III) is a carboxylic acid with a long-chain substituent having more than 22 carbon atoms because the component is solid at room temperature.

A typical compound of Component (B) represented by general formula (III) and used for the synthesis of the organo-titanium compound represented by general formula (I) includes:

$CH_3COOH$, $C_2H_5COOH$, $C_3H_7COOH$, $C_4H_9COOH$, $C_5H_{11}COOH$, $C_{12}H_{25}COOH$, $C_{17}H_{35}COOH$, $CH_2{=}CHCOOH$, $CH_2{=}C(CH_2)COOH$, $CH_2{=}CHCH_2COOH$, $C_8H_{17}CH{=}CHC_7H_{14}COOH$, $C_6H_5COOH$, $CH_3C_6H_4COOH$, $C_6H_{13}CH(OH)CH_2CH{=}CHC_7H_{14}COOH$, $NH_2CH_2COOH$, $NH_2C_8H_{16}COOH$, $ClCH_2COOH$, $NH_2C_6H_4COOH$, $ClC_6H_4COOH$, $HOC_6H_4COOH$, $HSCH_2COOH$ or $CH_3(CH_2)_7CH—CH(CH_2)_7COOH$.

O

In the invention, the coordinated group, $(H(O)P(OR'')_2)$, in general formula (I) mentioned above and the $H(O)P(OR'')_2$ compound represented by general formula (IV) are phosphite diester or phosphonate diester of its tautomer in which the symbols R'' are the same or different radicals and represent alkyl radicals, alkenyl radicals and aryl radicals, substituted or not substituted, having from 3 to 22 carbons atoms.

Examples of a substituent for R'' include halogen atoms and alkyl radicals.

The use of the organo-titanium compound represented by general formula (I) in which R'' has less than

3 or more than 22 carbon atoms, as an effective component of the surface treating agent, gives no recognized expected coupling effect between the polymer medium and the filler in either case.

A typical compound of component (C) represented by general formula (IV) and used for the synthesis of the organo-titanium compound represented by general formula (I) includes:

$(C_4H_9O)_2P(O)H$, $(C_8H_{17}O)_2P(O)H$, $(C_{12}H_{25}O)_2P(O)H$,
$((C_4H_9O)(C_8H_{17}O))P(O)H$, $(C_6H_5O)_2P(O)H$, $(HOC_6H_4C_3H_{17}O)_2P(O)H$,
$(CH_2{=}CHCH_2O)_2P(O)H$, $(ClCH_2CHClCH_2O)_2P(O)H$,
$(CH_2{=}C(CH_3)COOC_2H_4O)_2P(O)H$, or $(CH_3CH_2OCH_2CH_2O)_2P(O)H$.

The organo-titanium compound of the invention, as represented by general formula (I) shown above, has a phosphite diester (phosphonate diester) coordinated to the alkoxy titanium acylate and thanks to its polarity the dissolution of the organo-titanium compound into an organic medium is increased.

Therefore, the affinity with a variety of polymer media increases while keeping the hydrolytic and lipophilic properties the alkoxy titanium acylate has.

In the synthesis of the organo-titanium compound represented by general formula (I), the presence of phosphite diester (phosphonate diester) prevents the organo-titanium compound from crystallizing which may occur if Component (B) is a carboxylic acid with a functional group.

The organo-titanium compound of the invention has a hydrolytic —(OR) group with large affinity with a filler, a —(OCOR') group with large affinity with an organic medium and a —$(H(O)P(OR'')_2)$ group, thereby being suitable as an effective component of organo-titanium surface treating agent.

The organo-titanium compound of the invention can be synthesized by any one of the following synthetic methods.

(a) A method that the aforementioned 3 components, (A), (B) and (C), are simultaneously reacted.

(b) A method that Components (A) and (B) mentioned above are first reacted and then Component (C) is reacted.

(c) A method that Components (A) and (C) mentioned above are first reacted and then Component (B) is reacted.

If Component (B) is a carboxylic acid having a functional group, method (a) or (c), more preferably method (c), is employed.

The reaction, depending on a type of Component (B) used, is usually carried out by keeping stirring for 0.5 to 48 hours at reaction temperature between room temperature and 150°C.

When the reaction product is used as a surface treating agent, a reaction ratio of Components (A), (B) and (C) is, to 1 mole of Component (A), 0.5—3.0 moles of Component (B) and 0.5—3.0 moles of component (C), more preferably, to 1 mole of Component (A), 1.0—2.0 moles of Component (B) and 1.0—2.0 moles of component (C).

In the above reaction ratio of the components, if Component (B) is less than 0.5 moles to 1 mole of Component (A), the production rate of the compound represented by general formula (I) in the reaction product is low and the reaction product has small desired effect when used as a surface treating agent, and if exceeds 3.0 moles, the effect of the reaction product as a surface treating agent is not increased as expected.

Recognized free fatty acids, esters, etc. may give an inverse effect.

If Component (C) is less than 0.5 moles to 1 mole of Component (A), the desired effect is small, and if more than 3.0 moles, the effect is rather reduced.

When the reaction product is used as a surface treating agent, one compound represented by general formula (I) can be singly used or a mixture of two or more compounds can be also employed.

The reaction product synthesized by using a mixture of two or more compounds for each component (A), (B) or (C) mentioned above as a starting material can be employed as a surface treating agent.

The organo-titanium surface treating agent of the invention is used by blending into a wide variety of a composite system of an organic medium and a filler in order to e.g. reduce the viscosity of the mixture system, improve the dispersibility of the filler into the organic medium or improve the physical properties of the composite system.

An organic medium includes mainly a polymer medium such as linseed oil, tung oil, soy bean oil, dehydrated castor oil, maleinized oil, rosin, rosin esters, acrylic resin, phenol resin, xylene resin, alkyd resin, amino resin, epoxy resin, urea resin, polyurethane resin, chlorinated rubber, cyclized rubber, nitrocellulose, polyether polyol, polyester polyol, polyethylene resin or polypropylene resin.

A plasticizer includes dioctyl phthalate or dioctyl adipate, which is blended into the polymer medium beforehand.

A filler includes a large number of fillers for blending into the above organic medium to make a composite system.

These fillers include "relatively inactive solid substances added to polymer materials in order to e.g. reduce the unit price of polymer material, improve the processability and physical properties or give color effects" (Physical Properties of filled Polymers, p8—p9, Kozo Sato, Riko Publishing Co. (1978)) and "pigments and extenders named in the coating material industry" (p9 in the same book).

A filler includes calcium carbonate, kaolin, clay, mica, talc, wollastonit, calcium silicate, titanium oxide, iron oxide, silica, carbon black, calcium sulfate, barium sulfate, aluminum powder, zinc powder, glass fiber, wood powder, paper/fiber powder, and synthetic and natural fibers.

Any one of the following methods is applied as a using method of the surface treating agent of the invention but the using method is not limited to these.

(a) A method that the surface treating agent is added to the organic medium beforehand.

(b) A method that the surface treating agent is simultaneously added when the organic medium and the filler are mixed.

(c) A method that the surface treating agent is coated on the surface of the filler beforehand.

The surface treating agent of the invention can be used concurrently with other kinds of surface treating agents within the range that the purpose is not failed.

An amount of the surface treating agent used as the organic titanium compound represented by general formula (I) mentioned above is 0.1 to 5 parts by weight, preferably 0.5 to 2 parts by weight, to 100 parts by weight of the filler.

The surface treating agent has a small effect if less than 0.1 parts by weight of the agent to 100 parts by weight of the filler is added, and gives an increase in effect not so much as expected if more than 5 parts by weight is added to use.

Best ways to carry out the invention

The best ways to carry out this invention are concretely described by referring to actual examples and test examples.

However the range of the invention is not limited by the following examples.

The "parts" used in the following examples stands for parts by weight unless otherwise noted.

Example 1: Synthesis of organo-titanium compound

Into a 1 lit. fourneck flask equipped with a stirrer, a thermometer and a cooler was added 284 g (1 mole) of tetra-isopropoxy titanium, and 86 g (1 mole) of methacrylic acid was gradually added over an hour with stirring with care for the temperature not to exceed 35°C.

Into the generated light yellowish brown transparent solution was gradually added 388 g (2 moles) of dibutyl hydrogen phosphite over an hour in a similar manner to the above with care for the temperature not to exceed 40°C.

After the completion of the addition of dibutyl hydrogen phosphite, the stirring of the resulting solution was kept for another hour.

While keeping the obtained reaction product at 40°C, the pressure was reduced to 1.333 kPa (10 torr), for distilling 59 g of volatile matter, and Compound (T-1) was obtained as a distillation residue.

The obtained distillate was isopropanol.

The reaction product of the distillation residue was assumed to be the following compound (T-1) from the molecular weight measured by vapor pressure osmometer and the values of elementary analysis.

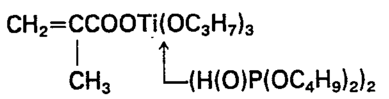

(T-1)

| | (Found) | (Calculated) |
|---|---|---|
| C | 50.1% | 49.9% |
| H | 9.4% | 9.2% |
| P | 9.1% | 8.9% |
| $TiO_2$ | 11.2% | 11.4% |
| Molecular weight | 662 | 698 |

(2) Compound (T-2) and comparison compound (CT-1)

Into a 2 lit. 4 neck flask equipped with a stirrer, a thermometer and a cooler was added 340 g (1 mole) of tetra-n-butoxy titanium and 284 g (1 mole) of isostearic acid was dropped over an hour with stirring with care for the temperature not to raise higher than 40°C.

After the completion of the dropping of isostearic acid, while keeping the resulting solution at 40°C, the pressure was reduced to 1.333 kPa (10 torr), and 73 g of n-butanol was recovered.

The obtained distillation residue was a light yellow transparent solution, which was a comparison compound (CT-1).

The analytical results showed that the comparison compound (CT-1) was tri-n-butoxy titanium monoisostearate.

Then 227 g of comparison compound (CT-1) was added into a 4 neck flask arranged in a similar manner to the above, and 210 g (0.5 moles) of dilauryl hydrogen phosphite was dropped over an hour with stirring

with care for the temperature not to exceed 40°C. The solution was successively stirred for another 2 hours after the dropping was completed.

The reaction solution was pressure reduced to 0.9331 kPa (7 torr) at 40°C, giving almost no recognizable distillates.

The reaction product was a light yellow transparent solution.

The obtained reaction product was assumed to be the following compound (T-2) from the molecular weight and the values of elementary analysis.

$$C_{17}H_{35}COOTi(OC_4H_9)_3 \leftarrow (H(O)P(OC_{12}H_{25})_2) \quad (T\text{-}2)$$

| | (Found) | (Calculated) |
|---|---|---|
| C | 67.5% | 66.9% |
| H | 12.2% | 11.8% |
| P | 3.0% | 3.2% |
| $TiO_2$ | 8.0% | 8.2% |
| Molecular weight | 925 | 968 |

(3) Compound (T-3) and comparison compound (CT-2)

Into a 2 lit. 4 neck flask equipped with a stirrer, a thermometer and a cooler was added 568 g (2 moles) of tetra isopropoxy titanium, and 388 g (2 moles) of dibutyl hydrogen phosphite was gradually added over an hour with stirring with care for the temperature not to exceed 45°C.

After the completion of the addition of dibutyl hydrogen phosphite, the stirring was kept for about another hour to give an almost colorless transparent solution.

The obtained reaction solution was pressure reduced to 0.665 kPa (5 torr) at 45°C, giving almost no recognizable distillates.

The obtained reaction product was comparison compound (CT-2).

478 g of comparison compound (CT-2) was placed in a 2 lit. 4 neck flask arranged in a similar manner to the above, and, while keeping the temperature at 45°C, 144 g (1 mole) of 2-ethyl hexanoic acid was gradually added over 30 minutes with stirring.

After the completion of the addition of 2-ethyl hexanoic acid, the solution was successively stirred for another hour, and then pressure reduced to 2.666 kPa (20 torr) at 45°C. 59 g of isopropanol was recovered as a distillate and a reaction product was obtained as a distillation residue.

The obtained reaction product was assumed to be the following compound (T-3) from the molecular weight and the values of elementary analysis.

$$C_7H_{15}COOTi(OC_3H_7)_3 \leftarrow (H(O)P(OC_4H_9)_2) \quad (T\text{-}3)$$

| | (Found) | (Calculated) |
|---|---|---|
| C | 54.0% | 53.3% |
| H | 10.0% | 9.9% |
| P | 5.3% | 5.5% |
| $TiO_2$ | 14.0% | 14.2% |
| Molecular weight | 525 | 562 |

(4) Compound (T-4)

Into a 2 lit. 4 neck flask equipped with a stirrer, a thermometer and a cooler was added 340 g (1 mole) of tetra-n-butoxy titanium, and, under the control of the temperature to 35°C or below by cooling the outside with water, 388 g (2 moles) of dibutyl hydrogen phosphite was gradually added over 20 minutes and the resulting solution was successively stirred for another 45 minutes after the addition was completed.

Then 296 g of recinoleic acid (neutralization value: 179, iodine number: 89, hydroxyl value: 168, Ito Oil

Mfg. Co., Ltd.) was gradually added over an hour with stirring. The resulting solution was kept stirring for another hour after the addition was completed.

The obtained reaction solution was pressure reduced to 1.333 kPa (10 torr) at 60°C, 72 g (0.97 moles) of n-butanol was distilled to recover, and a viscous brown transparent liquid was obtained.

The obtained reaction product was assumed to be the following compound (T-4) from the values of elementary analysis.

$$(C_4H_9O)_3TiOCOC_{17}H_{32}OH \leftarrow (H(O)P(OC_4H_9)_2)_2 \qquad (T\text{-}4)$$

| | (Found) | (Calculated) |
|---|---|---|
| C | 58.2% | 58.0% |
| H | 18.1% | 17.8% |
| P | 6.6% | 6.5% |
| $TiO_2$ | 8.3% | 8.4% |

(5) Compound (T-5) and comparison compound (CT-3)

Into a 1 lit. 4 neck flask equipped with a stirrer, a thermometer and a cooler was added 340 g (1 mole) of tetra-n-butoxy titanium, and 194 g (1 mole) of dibutyl hydrogen phosphite was gradually added over an hour with stirring with care for the temperature not to exceed 50°C. The resulting solution was successively stirred for about another hour after the addition was completed.

A part of the obtained reaction solution was pressure reduced to 2.666 kPa (20 torr) at 50°C, giving no recognizable distillates.

Into a 4 neck flask arranged in a similar manner to the above was added 262 g of the obtained reaction solution and, while keeping the temperature to 40°C, 68.5 g (0.5 moles) of p-amino benzoic acid was added with stirring in a way that about 2 g was added one by one when the previously added crystal was dissolved completely.

It took approximately 2 hours to add p-amino benzoic acid, then the resulting solution was kept stirring for another 2 hours and a brown transparent solution was obtained.

The obtained reaction solution was pressure reduced to 1.333 kPa (10 torr) at 50°C, 36 g of n-butanol was recovered, and a reaction product was obtained.

The obtained reaction product was assumed to be the following compound (T-5) from the molecular weight and the values of elementary analysis.

$$(C_4H_9O)_3TiOCOC_6H_4NH_2 \leftarrow (H(O)P(OC_4H_9)_2) \qquad (T\text{-}5)$$

| | (Found) | (Calculated) |
|---|---|---|
| C | 55.0% | 54.3% |
| H | 9.0% | 8.8% |
| N | 2.4% | 2.3% |
| P | 5.3% | 5.2% |
| $TiO_2$ | 13.0% | 13.4% |
| Molecular weight | 553 | 597 |

The reactions and treatments were repeated under the same conditions as those for the synthesis of Compound (T-5) except that 20 g of p-amino benzoic acid was added, and comparison compound (CT-3) was obtained.

The obtained compound (T-5) and comparison compound (CT-3) were soluble in epoxy resin (Epicoat 828) of an amount of 20 times and in polyether (Diol-1000, Mitsui Nisso Urethane Co., Ltd.).

The reactions and treatments were again repeated completely under the same conditions as those for the synthesis of compound (T-5) except that dibutyl hydrogen phosphite was not used, and a highly viscous orange-red solution was obtained.

The obtained reaction product gave distilled n-butanol of almost equal amount to that of this reaction examples. However, the product was an extremely highly viscous gummy substance and was not dissolved completely in the above epoxy resin and polyether.

(6) Compound (T-6) and comparison compound (CT-4)

Into a 2 lit. 4 neck flask equipped with a stirrer, a thermometer and a cooler was added 340 g (1 mole) of tetra-n-butoxy titanium, and, under the control of the temperature to 40°C or below by cooling the outside with water, 836 g (2 moles) of dilauryl hydrogen phosphite was gradually added over an hour with stirring. The resulting solution was kept stirring for another 30 minutes after the addition was completed.

While keeping the stirring and maintaining the temperature to 40°C, 92 g (1 mole) of thioglycolic acid was gradually added over an hour and the resulting solution was successively stirred for another hour after the addition was completed.

The resulting solution was left standing for a day and a night, and then heated to 60°C under reduced pressure of 1.333 kPa (10 torr) for removing the side product of n-butanol by distillation, giving a reaction product.

The amount of n-butanol distilled was 72 g.

The obtained reaction product of orange yellow transparent liquid was assumed to be the following compound (T-6) from the values of elementary analysis.

$$(C_4H_9O)_3TiOCOCH_2SH$$
$$\uparrow$$
$$(H(O)P(OC_{12}H_{25})_2)_2 \qquad (T\text{-}6)$$

| | (Found) | (Calculated) |
|---|---|---|
| C | 63.0% | 62.3% |
| H | 11.5% | 11.1% |
| S | 2.7% | 2.7% |
| P | 5.3% | 5.2% |
| $TiO_2$ | 6.9% | 6.7% |

A procedure was repeated completely under the same conditions as those for the synthesis of compound (T-6) except that thioglycolic acid was not added and comparison compound (CT-4) was obtained.

The pressure reduction of comparison compound (CT-4) gave no n-butanol distilled.

The direct addition of thioglycolic acid to tetra-n-butoxy titanium without adding dilauryl hydrogen phosphite resulted in forming yellow crystal.

The obtained formed crystal was not dissolved in toluene of amount of 10 times, isopropanol, polyethers and epoxy resin (Epicoat-828 Yuka Shell Epoxy Kabushikikaisha (Company)).

Example 2: Use as a surface treating agent

(1) Reduction in viscosity of organic medium-filler composite system

(a) Epoxy resin-titanium oxide system

A hundred parts of epoxy resin (Epicoat-828, Yuka Shell Epoxy Kabushikikaisha), 0.5 parts of each of the organo-titanium compounds synthesized in Example 1 and 50 parts of titanium oxide (Ishihara Sangyo Kaisha, Ltd.) were well kneaded in a ball mill and the kneaded product was measured for the viscosity at 25°C.

For comparison, commercially available surface treating agents were used in the same conditions and the obtained kneaded products were measured for the viscosity at 25°C.

(Commercially available surface treating agents used)

KR-TTS: $Ti(OC_3H_7)(OCOC_{17}H_{33})_3$ (Kenrich Petrochemicals, Inc.)
KR-41B: $Ti(OC_3H_7)_4\ (P(OC_8H_{17})_2OH)_2$ (Kenrich Petrochemicals, Inc.)

The measured results of viscosity are shown in Table 1.

(b) Epoxy resin-calcium carbonate system

A hundred parts of epoxy resin (Epicoat-828, as described above), 1.0 part of each of the organo-titanium compounds synthesized in Example 7 and 100 parts of calcium carbonate (Shiraishi Kogyo Kaisha, Ltd.) were well kneaded in a ball mill and the kneaded product was measured for the viscosity at 25°C.

For comparison the commercially available surface treating agents (as described above) and dibutyl hydrogen phosphite (DBHP), a raw material for the synthesis of the organo-titanium compounds, were used under the same conditions and the obtained kneaded products were measured for the viscosity at 25°C.

The measured results of viscosity are shown in Table 1.

TABLE 1

| | Organic titanium compound (surface treating agent) | Viscosity mPa · s (25°C) | |
|---|---|---|---|
| | | (a) $TiO_2$ system | (b) $CaCO_3$ system |
| Example | T-1 | 22,000 | 56,000 |
| | T-2 | 23,000 | 65,000 |
| | T-3 | 23,000 | 57,000 |
| | T-4 | 24,000 | — |
| | T-5 | 26,000 | — |
| | T-6 | 30,000 | — |
| Comparison example | — | 63,000 | 86,000 |
| | CT-1 | 66,000 | >100,000 |
| | CT-2 | 24,000 | — |
| | CT-3 | 25,000 | — |
| | CT-4 | 35,000 | — |
| | KR-TTS | 64,000 | >100,000 |
| | KR-41B | 41,000 | 77,000 |
| | DBHP | — | 87,000 |

As shown in Table 1, the organo-titanium compounds of the invention, which are chelated with an organic phosphonate, have an excellent effect of viscosity reduction in the organic medium-filler systems.

(2) Dispersion of filler in organic medium-filler composite system

(a) Epoxy resin-titanium oxide system

A hundred parts of Epicoat-828 (as described above), 0.5 parts of each of organo-titanium compounds synthesized in Example 1, 50 parts of titanium oxide (as described above) and 37 parts of xylene were well mixed for a fixed time by using a paint shaker. The resulting mixture was measured for the viscosity at 25°C.

The obtained mixture was placed in a test bottle of 8 cm in inner diameter and 15 cm high so that the solution was 10 cm high in the bottle. The bottle was covered with a lid and left standing at room temperature for a week in order to study the dispersion stability of the filler according to the presence or absence of precipitate.

For comparison the aforementioned commercially available surface treating agents, and dibutyl hydrogen phosphite (DBHP) and dilauryl hydrogen phosphite (DLHP) which were used as a material for the synthesis of the organo-titanium compounds of the invention were used and treated in a similar manner to the above for the study of viscosity and dispersibility.

The results are shown in Table 2.

(b) Polyether polyol-calcium carbonate system

A hundred parts of polyether polyol (Diol-3000, Mitsui Nisso Urethane Co., Ltd.), 30 parts of dioctyl phthalate, 0.6 parts of each of the organo-titanium compounds synthesized in Example 1 and 60 parts of calcium carbonate (as described above) were kneaded and the kneaded product was measured for the viscosity at 25°C.

The presence or absence of precipitated calcium carbonate in the obtained kneaded product a month after the kneading, was studied in a similar manner to the above. The dispersion stability was checked by a degree of difficulty to re-disperse the precipitate.

For comparison the aforementioned commercially available surface treating agents and dibutyl hydrogen phosphite (DBHP) used as a material for the synthesis of the organo-titanium compounds of the invention were used and a similar treatment procedure was repeated to check the viscosity and dispersibility.

The results are shown in Table 2. In Table 2, ◎ stands for no precipitation and extremely easy re-dispersion, and ○ stands for with precipitation but easy re-dispersion.

TABLE 2

| | Organic titanium compound (surface treating agent) | (a) Epoxy system | | (b) Polyether system | |
|---|---|---|---|---|---|
| | | Viscosity mPa · s | Dispersion stability | Viscosity mPa · s | Dispersion stability |
| Example | T-1 | 160 | no precipitate | 680 | ◎ |
| | T-2 | 350 | no precipitate | 700 | ◎ |
| | T-3 | 265 | no precipitate | 660 | ◎ |
| | T-4 | — | — | 780 | ◎ |
| | T-5 | — | — | 820 | ◎ |
| | T-6 | — | — | 810 | ◎ |
| Comparison example | — | 770 | precipitate | 7,100 | ◎ |
| | CT-1 | 490 | precipitate | 8,200 | ◎ |
| | CT-2 | — | — | 650 | ○ |
| | CT-3 | — | — | 810 | ○ |
| | CT-4 | — | — | 920 | ○ |
| | KR-TTS | 480 | precipitate | 8,200 | ◎ |
| | KR-41B | 380 | precipitate | 700 | ○ |
| | DBHP | 610 | precipitate | 2,300 | ◎ |
| | DLHP | 560 | precipitate | — | — |

In the table DBHP means dibutyl hydrogen phosphite and DLHP is dilauryl hydrogen phosphite.

As shown in Table 2, the organo-titanium compounds of the invention have an excellent effect of a reduction in viscosity in the organic medium-filler composite systems as well as excellent dispersion stability of the filler in the mixture system.

(3) Resin-filler composite cured substance

(a) Urethane cured substance

Sixty parts of calcium carbonate (as described above) was coated with 1.0 part of each of the organo-titanium compounds synthesized in Example 1 by using a Henschell mixer.

To the obtained coated product were added 100 parts of polyether polyol (MN-3050K, Mitsui Nisso Urethane Co., Ltd.), and 10.5 parts of polyether polyol (MNT-300, Mitsui Nisso Urethane Co., Ltd.), and the mixture was well kneaded. The kneaded product was measured for the viscosity at 25°C.

To the obtained kneaded product was added an isocyanate compound (MDI-LK, Mitsui Nisso Urethane Co., Ltd.) at a ratio of NCO/OH=1.05 and they were mixed at room temperature. The resulting mixture was poured in a mold and heated at 120°C for 4 hours for curing.

The obtained cured product was heat treated at 100°C for 4 days. The hardness, tensile strength and elongation at break of the product before and after the heat treatment was measured.

For comparison various tests were carried out in a similar method to the above by employing a system with no surface treating agent blended, and blending systems using the aforementioned commercially available surface treating agents and dibutyl hydrogen phosphite (DBHP) and dilauryl hydrogen phosphite (DLHP) which were used as a material for the synthesis of the organo-titanium compounds of the invention.

The results are shown in Table 3.

TABLE 3

| | Organic titanium compound (surface treating agent) | Kneaded viscosity mPa · s | Hardness shore A | Tensile strength $Kg/cm^2$ | Elongation at break % |
|---|---|---|---|---|---|
| Example | T-1 | 1300 | 79/77 | 38.3/38.6 | 92.5/95.5 |
| | T-2 | 1200 | 81/80 | 38.0/38.6 | 91.8/93.0 |
| | T-3 | 1200 | 80/79 | 39.0/39.5 | 92.1/93.0 |
| | T-4 | 1400 | 85/84 | 46.0/46.0 | 88.6/89.0 |
| | T-5 | 1600 | 88/87 | 47.5/47.0 | 87.0/86.2 |
| | T-6 | 1300 | 87/86 | 46.5/46.7 | 88.0/88.0 |
| Comparison example | — | 2800 | 78/73 | 36.8/34.2 | 86.5/96.7 |
| | CT-1 | 3000 | 76/75 | 35.7/34.2 | 72.5/70.0 |
| | CT-2 | 1300 | 72/64 | 35.8/33.2 | 91.0/90.0 |
| | CT-3 | 1300 | 79/78 | 37.8/37.8 | 89.5/89.0 |
| | CT-4 | 1400 | 74/70 | 36.8/33.8 | 91.0/90.0 |
| | KR-TTS | 3100 | 76/74 | 35.8/35.0 | 73.0/70.0 |
| | KR-41B | 1200 | 73/65 | 36.1/32.5 | 91.0/91.5 |
| | DBHP | 2600 | 71/63 | 34.1/31.0 | 91.0/81.0 |
| | DLHP | 2500 | 72/60 | 34.5/31.0 | 92.0/93.5 |

In the table, the numerator stands for the value before the heat treatment and the denominator is the value after the heat treatment.

(b) Polypropylene cured substance

A hundred parts of calcium carbonate (as described above) was coated with 1.5 parts of each of the organo-titanium compounds synthesized in Example 1 by using a Henschell mixer.

Then the obtained coated product was added to 100 parts of polypropylene resin (Ube Industries, Ltd.). The mixture was kneaded by a two-rod roll heated to 165—170°C for 15 minutes and pulverized.

The melt viscosity of the obtained pulverized products was measured by melt indexer (JIS-k-6760).

These pulverized products were molded by thermal pressing (200°C×500 $kg/cm^2$) for 7 minutes for the measurements of such properties as Izod impact value (JIS-k-6740), tensile strength and elongation at break.

The results are shown in Table 4.

TABLE 4

| | | Organic titanium compound (surface treating agent) | Meld index g/10 min. | Izod impact value $Kg/cm^2$ | Tensile strength $Kg/cm^2$ | Elongation at break % |
|---|---|---|---|---|---|---|
| Example | | T-1 | 5.3 | 4.7 | 265 | 41 |
| | | T-2 | 6.0 | 5.9 | 251 | 56 |
| | | T-3 | 5.8 | 5.6 | 258 | 49 |
| Comparison example | | — | 2.5 | 3.6 | 255 | 31 |
| | | CT-3 | 5.0 | 4.1 | 240 | 39 |
| | | KR-TTS | 5.0 | 4.0 | 240 | 42 |
| | | PP | 6.5 | 7.0 | 295 | approx. 600 |

In the table, PP stands for pure polypropylene.

(c) Epoxy cured substances

By using a Henschell mixer, 1 kg of calcium carbonate (Whiton SSB, Shiraishi Kogyo Kaisha, Ltd.) was added to a 2% concentration isopropanol solution containing 10 g of each of the organo-titanium compounds synthesized in Example 1 and the resulting solution was stirred for 2 hours at room temperature and then dried under reduced pressure, giving coated powder.

A hundred grams of the obtained coated powder and 200 g of epoxy resin (Epicoat-828, as described above) were kneaded by a ball mill.

Fifty grams of the obtained kneaded product was mixed with 35 g of a mixture of 100 g of pyromellitic acid and 400 g of methyl nadic anhydride. After casting and defoaming, the resulting mixture was heated at 100°C for 2 hours and for another 2 hours at 180°C, giving a molding.

The bending strength of the obtained moldings is shown in Table 5.

TABLE 5

| | Organic titanium compound (surface treating comp.) | Bending strength $Kg/mm^2$ |
|---|---|---|
| Example | T-3 | 15.6 |
| | T-5 | 17.2 |
| | T-6 | 16.8 |
| Comparison example | — | 14.2 |
| | CT-3 | 14.8 |
| | CT-4 | 12.8 |
| | KR-TTS | 10.2 |
| | KR-41B | 9.8 |
| | DLHP | 11.0 |

(4) Organic medium-filler composite coat film
Acrylic-titanium oxide system

A hundred parts of acrylic resin (Acrylic A-166, Dai Nippon Ink Co.), 2.4 parts of each of the organo-titanium compounds synthesized in Example 1, 240 parts of titanium oxide (as described above) and 200 parts of xylene were well mixed to give a mixture.

The obtained mixture was measured for the viscosity at 25°C and tested for the leveling ability and coat film.

For comparison, the aforementioned commercially available surface treating agents were used.

The results are shown in Table 6.

The leveling ability in Table 6 is represented by 3 grades, A, B and C, in the order from the better.

The gloss of coat film is represented by 60° specular reflection factor measured by using a glossimeter of Type GM-3.

TABLE 6

| | Organic titanium compound | Viscosity mPa · s | Leveling ability | Gloss % | Pencil hardness |
|---|---|---|---|---|---|
| Example | T-1 | 2700 | A | 18.0 | HB |
| | T-2 | 2500 | A | 17.0 | HB |
| | T-3 | 2400 | A | 18.5 | H |
| Comparison example | — | 40000 | C | 12.5 | HB |
| | CT-2 | 4900 | B | 17.5 | HB |
| | KR-TTS | 2900 | B | 13.0 | HB |
| | KR-41B | 5800 | B | 14.0 | HB |

(5) Coating of steel plate

Each of the organo-titanium compounds synthesized in Example 1 was diluted 8 times with n-hexane. The diluted solution was sprayed to make a coat on a chromated steel plate so that the dry film is approximately 1 μ thick. The plate was dried at 80°C for 30 minutes, giving a coated steel plate.

A finger print staining test and rust prevention tests of 48 hours and 168 hours by salt spray were performed for the obtained coated steel plate.

The test results are shown in Table 7.

TABLE 7

| | Organic titanium compound | Finger print staining | Rust generation | |
|---|---|---|---|---|
| | | | 48 hours | 168 hours |
| Example | T-1 | No | No | No |
| | T-2 | No | No | No |
| | T-3 | No | No | No |
| Comparison | — | Yes | Yes | Yes |
| | KR-TTS | Yes | No | No |
| | DBHP | No | No | Yes |

As shown in Table 7, the organo-titanium compounds of the invention allow to make a coat, which is not stained by finger prints as well has excellent rust preventive ability, on a steel plate.

Industrial applicability

A surface treating agent containing the organic titanium compound of the invention as an effective

component gives various numerous effects, as shown in the examples described above, particularly by using it to blend into a composite system of a polymer medium and a filler. When a filler is dispersed into a polymer medium in particular, the said agent has extremely excellent effects for reducing the viscosity of the mixture system, improving the dispersibility of the filler and improving the physical properties of the composite system.

Concretely obtained effects are listed below.

(a) For coating materials and printing ink

i) Improvement of gloss or hiding power

ii) Improvement of leveling ability

iii) Reduction in viscosity of composite system

iv) Saving of solvents (diluting agents)

v) Increase in a filling ratio of filler

vi) Reduction in mixing time when manufacturing

(b) For polymer compounds for molding processing

i) Improvement of flowability

ii) Increase in a filling ratio of filler

iii) Improvement of physical properties

iv) Reduction in mixing dispersing time

The organo-titanium surface treating agents of the invention with the above properties are thus applicable to a variety of mixture systems of various kinds of organic media and fillers such as composite systems of matter with organic polymer media, in order to improve such cases as the dispersion of a pigment into a coating material, printing ink, etc., the dispersion of a filler into a resin material to be molded by casting or molding processing, the affinity between the fiber and the resin of the matrix in a fiber composite material or the adhesiveness between the surface of metal and a coating material.

The said surface treating agent is available as a surface treating agent for steel plates. As shown in the above example, the coating of the surface treating agent on a steel plate improves the properties of the plate such as resistance against finger print staining and rust prevention.

This invention offers a surface treating agent applicable to wide fields of the industries and a new organo-titanium compound as an effective component of the agent, thereby having an extremely great industrial significance.

**Claims**

1. An organic titanium compound represented by the following general formula (I)

$$(RO)_n\text{—Ti—}(OCOR')_{4-n} \quad \uparrow\!\text{—}(H(O)P(OR'')_2)_m \qquad (I)$$

wherein the symbols R are the same or different radicals and represent alkyl radicals and alkenyl radicals having from 1 to 8 carbon atoms, the symbols R′ are the same or different radicals and represent alkyl radicals, alkenyl radicals or aryl radicals having from 1 to 22 carbon atoms which are unsubstituted or substituted by a halogen atom, a hydroxyl group, an amino group, a nitro group, a mercapto group or an epoxygroup, the symbols R″ are the same or different radicals and represent alkyl radicals, alkenyl radicals or aryl radicals having from 3 to 22 carbon atoms which are unsubstituted or substituted by a halogen atom or an alkyl group, or R″ represents $C_4H_9$, $C_8H_{17}$, $C_{12}H_{25}$, $C_6H_5$, $HOC_6H_4C_3H_{17}$, $CH_2{=}CHCH_2$, $ClCH_2CHClCH_2$, $CH_2{=}C(CH_3)COOC_2H_4$ and $CH_3CH_2OCH_2CH_2$

n is an integer from 1 to 3, and

m is 1 or 2.

2. A method from the preparation of the organo-titanium compound represented by the general formula (I), which comprises reacting components (A), (B) and (C) (where R, R′, R″, n and m are as defined in claim 1);

Component (A): a tetra-alkoxy titanium compound represented by general formula (II)

$$Ti(OR)_4 \qquad (II)$$

(where R is as defined in claim 1),

Component (B): a carboxylic acid represented by general formula (III)

$$R'COOH \qquad (III)$$

(where R is as defined in claim 1),

Component (C): a phosphite diester or a phosphonate diester represented by general formula (IV)

$$(R''O)_2P(O)H \qquad (IV)$$

(where R'' is as defined in claim 1).

3. A surface treating agent containing the organo-titanium compound represented by the following general formula (I)

$$(RO)_n\text{—Ti—}(OCOR')_{4-n} \quad \uparrow\!\text{—}(H(O)P(OR'')_2)_m \qquad (I)$$

(where R, R', R'', n and m are as defined in claim 1) as an effective component.

4. A surface treating agent according to Claim 3 in which the surface treating agent is a reaction product produced by reacting Components (A), (B) and (C) according Claim 2 in a ratio of 0.5 to 3.0 moles of Component (B) and 0.5 to 3.0 moles of Component (C) to 1 mole of Component (A).

**Patentansprüche**

1. Organische Titanverbindung der allgemeinen Formel (I)

$$(RO)_n\text{—Ti—}(OCOR')_{4-n} \quad \uparrow\!\text{—}(H(O)P(OR'')_2)_m \qquad (I)$$

worin die Symbole R gleiche oder voneinander verschiedene Reste sind und für Alkylreste und Alkenylreste mit 1 bis 8 Kohlenstoffatomen stehen, die Symbole R' gleiche oder voneinander verschiedene Reste sind und für Alkylreste, Alkenylreste oder Arylreste mit 1 bis 22 Kohlenstoffatomen stehen, welche unsubstituiert oder substituiert sein können durch ein Halogenatom, eine Hydroxylgruppe, eine Aminogruppe, eine Nitrogruppe, eine Mercaptogruppe oder eine Epoxygruppe, die Symbole R'' gleiche oder voneinander verschiedene Reste sind und für Alkylreste, Alkenylreste oder Arylreste mit 3 bis 22 Kohlenstoffatomen stehen, die unsubstituiert oder substituiert sind durch ein Halogenatom oder eine Alkylgruppe, oder R'' für $C_4H_9$, $C_8H_{17}$, $C_{12}H_{25}$, $C_6H_5$, $HOC_6H_4C_3H_{17}$, $CH_2{=}CHCH_2$, $ClCH_2CHClCH_2$, $CH_2{=}C(CH_3)COOC_2H_4$ und $CH_3CH_2OCH_2CH_2$ steht,

n eine ganze Zahl von 1 bis 3 ist und

m 1 oder 2 ist.

2. Verfahren zur Herstellung einer Organotitanverbindung gemäß der allgemeinen Formel (I), umfassend die Reaktion der Komponenten (A), (B) und (C) (worin R, R', R'', n und m wie in Anspruch 1 definiert sind);

Komponente (A): Tetra-alkoxy-Titanverbindung der allgemeinen Formel (II)

$$Ti(OR)_4 \qquad (II)$$

(worin R wie in Anspruch 1 definiert ist),

Komponent (B): Carbonsäure der allgemeinen Formel (III)

$$R'COOH \qquad (III)$$

(worin R' wie in Anspruch 1 definiert ist),

Komponent (C): Phosphitdiester oder Phosphonatdiester der allgemeinen Formel (IV)

$$(R''O)_2P(O)H \qquad (IV)$$

(worin R'' wie in Anspruch 1 definiert ist).

3. Oberflächenbehandlungsmittel, enthaltend die Organotitanverbindung gemäß der folgenden allgemeinen Formel (I)

$$(RO)_n\text{—Ti—}(OCOR')_{4-n} \quad \uparrow\!\text{—}(H(O)P(OR'')_2)_m \qquad (I)$$

(worin R, R', R'', n und m wie in Anspruch 1 definiert sind) als eine effektive Komponente.

4. Oberflächenbehandlungsmittel nach Anspruch 3, wobei das Oberflächenbehandlungsmittel ein Reaktionsprodukt ist, welches hergestellt wird durch Umsetzung der Komponenten (A), (B) und (C) nach Anspruch 2 in einem Verhältnis von 0,5 bis 3,0 mol der Komponente (B) zu 0,5 bis 3,0 mol Komponente (C) zu 1 mol der Komponente (A).

**Revendications**

1. Composé de titane organique représenté par la formule générale suivante:

$$(RO)_n\text{—Ti—}(OCOR')_{4-n} \leftarrow (H(O)P(OR'')_2)_m \qquad (I)$$

où les symboles R sont des radicaux identiques ou différents et représentent des radicaux alkyle et des radicaux alcényle ayant de 1 à 8 atomes de carbone, les symboles R' sont des radicaux identiques ou différents et représentent des radicaux alkyle, des radicaux alcényle ou des radicaux aryle ayant de 1 à 22 atomes de carbone qui sont non substitués ou substitués par un atome d'halogène, un groupement hydroxyle, un groupement amino, un groupement nitro, un groupement mercapto ou un groupement époxy, les symboles R'' sont des radicaux identiques ou différents et représentent des radicaux alkyle, des radicaux alcényle ou des radicaux aryle ayant de 3 à 22 atomes de carbone qui sont non substitués ou substitués par un atome d'halogène ou un groupement alkyle, ou R'' représente $C_4H_9$, $C_8H_{17}$, $C_{12}H_{25}$, $C_6H_5$, $HOC_6H_4C_3H_{17}$, $CH_2{=}CHCH_2$, $ClCH_2CHClCH_2$, $CH_2{=}C(CH_3)COOC_2H_4$ et $CH_3CH_2OCH_2CH_2$

n est un nombre entier de 1 à 3, et

m est 1 ou 2.

2. Procédé pour la préparation du composé d'organo-titane représenté par la formule générale (I) caractérisé en ce qu'il consiste à faire réagir des composants (A), (B) et (C) où R, R', R'', n et m sont tels que définis dans la revendication 1;

Composant (A): un composé de tétra-alkoxy titane représenté par la formule générale (II)

$$Ti(OR)_4 \qquad (II)$$

où R est tel que défini dans la revendication 1,

Composant (B): un acide carboxylique représenté par la formule générale (III)

$$R'COOH \qquad (III)$$

où R' est tel que défini dans la revendication 1,

Composant (C): un phosphite diester ou un phosphonate diester représenté par la formule générale (IV)

$$(R''O)_2P(O)H \qquad (IV)$$

où R'' est tel que défini dans la revendication 1.

3. Agent de traitement de surface caractérisé en ce qu'il contient le composé d'organo-titane représenté par la formule générale (I)

$$(RO)_n\text{—Ti—}(OCOR')_{4-n} \leftarrow (H(O)P(OR'')_2)_m \qquad (I)$$

où R, R', R'', n et m sont tels que définis dans la revendication 1, comme composant efficace.

4. Agent de traitement de surface selon la revendication 3, caractérisé en ce que l'agent de traitement de surface est un produit de réaction produit en faisant réagir les composants (A), (B) et (C) selon la revendication 2 dans un rapport de 0,5 à 3,0 moles de composant (B) et 0,5 à 3,0 moles de composant (C) à 1 mole de composant (A).